(19) Europäisches Patentamt
European Patent Office
Office européen des brevets

(11) EP 0 379 225 B1

## (12) EUROPEAN PATENT SPECIFICATION

(45) Date of publication and mention
of the grant of the patent:
**02.04.1997 Bulletin 1997/14**

(51) Int Cl.6: **G06T 15/00**, G01N 21/47

(21) Application number: **90101246.8**

(22) Date of filing: **22.01.1990**

(54) **Method and apparatus for displaying a translucent object**

Anzeigeverfahren und -gerät für ein durchsichtiges Objekt

Méthode et appareil pour afficher un objet translucide

(84) Designated Contracting States:
**DE FR GB**

(30) Priority: **20.01.1989 JP 12158/89**

(43) Date of publication of application:
**25.07.1990 Bulletin 1990/30**

(73) Proprietor: **DAIKIN INDUSTRIES, LIMITED
Osaka-shi, Osaka-fu 530 (JP)**

(72) Inventor: **Obata, Koei, Daikin Higashikusatsu
Shataku
Kusatsu-shi, Shiga, 525 (JP)**

(74) Representative: **Prüfer, Lutz H., Dipl.-Phys.
Harthauser Strasse 25d
81545 München (DE)**

(56) References cited:
**EP-A- 0 137 233**

## Description

The present invention relates to a method and an apparatus for displaying a translucent object, and more particularly, to a method and an apparatus suitable for realistically displaying an object which is not perfectly opaque and which has a fairly low transparency such as frosted glass, paper and the like, by a graphics display apparatus.

In conventional graphics systems for displaying images of objects, improvements in function are directed to the realistic display of various objects. A display with superior quantitative and qualitative effects can be obtained by selecting whether to display an object surface as an opaque surface or as a translucent surface, corresponding to the type of object.

To be more specific, when a translucent object is displayed in a surface model representation, the object is first defined as a translucent object, then the actual display color is determined by mixing the color of the object and the color of background, based upon the transmissivity of the translucent object. Consequently, when a light source is seen through a translucent object, the light source is displayed with decreased intensity corresponding to the transmissivity of the translucent object, and in color corresponding to the color of the translucent object.

When displaying a translucent object as above-mentioned, a translucent object having high transparency such as cellophane or the like can be displayed realistically. However, a translucent object having a low transparency such as frosted glass or the like is displayed rather different from its actual appearance. That is, the representation of a translucent object having a low transmissivity can be performed by decreasing the mixing rate of light from the light source, but the representation of a translucent surface having a low transparency cannot be performed realistically because the outline of the light source is distinctly displayed as in the case of cellophane or the like. To overcome the disadvantage, modelling of a blurred background such as seen through the translucent object having a low transparency is needed. However, the modelling is not actually performed, and only imperfect displaying of the translucent object is accordingly performed.

When an object to be displayed is paper for example, the object to be displayed is generally defined as an opaque object. However, paper selectively becomes an opaque object or a translucent object, depending upon the relative position of the paper with respect to a viewpoint and a light source. The paper is displayed fairly differently from its actual appearance accordingly. In particular, when a model such as a paper cup is displayed, an opaque portion and a translucent portion are seen, and both portions vary depending upon the relative position of the paper cup to the viewpoint and the light source. A realistic visual display hardly can be obtained accordingly.

From EP-A-0 137 233 a method according to the preamble of claim 1 and an apparatus according to the preamble of claim 4 are known. According to the known method the resulting color is calculated.

It is an object of the present invention as claimed to obtain a visual display with superior realistic appearance for a translucent object having a low transparency.

This object is solved by a method for displaying a translucent object on a display screen having the features of claim 1.

This object is also solved by an apparatus for displaying a translucent object on a display screen having the features of claim 4.

The diffused transmitted light component may be calculated based upon a coefficient which is a function of the characteristics of the material forming the translucent object, the thickness of the translucent object, the intensity of incident light from the light source and the angle of incidence of the incident light for illuminating the translucent object. The characteristics of the material include its transmissivity and its transparency.

Also, the diffusing operation includes the reflection of incident light and the refraction of incident light within the translucent object.

According to the inventive method for displaying a translucent object on a display screen set out in claim 1, and the apparatus for displaying a translucent object on a display screen set out in claim 4, the reflected ambient light component is obtained by calculation, then a brightness value is calculated based upon the reflected ambient light component and the diffused transmitted light component which arises from light that is passed through the translucent object according to diffusing operations. Thereafter, the translucent object is visually displayed based upon the brightness value thus calculated so as to blur the outlines of background objects which are seen through the low transparency translucent object. A visual display with superior realism for the translucent object is accordingly obtained.

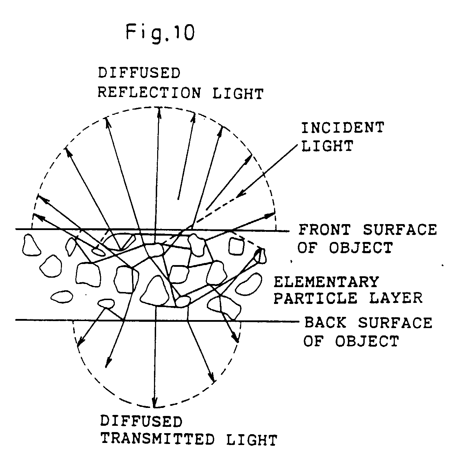

To be more specific, the inventor discovered that the brightness of a translucent object could be modelled as brightness values determined by the reflected ambient light component and the diffused transmitted light component which arises from light that is passed through the translucent object by reflection and refraction of the incident light. Diffused transmitted light is illustrated together with diffused reflected light in Fig. 10. The present invention was made based upon this discovery. The inventor also discovered that the diffused transmitted light component was determined by the intensity of incident light, the angle of incidence of the incident light and the color of the translucent object, and that the diffused transmitted light component could be calculated fairly accurately by introducing a transmission coefficient for a translucent object instead of a reflection coefficient. Realistic display of the translucent object can be obtained by taking the calculated diffused transmitted light component into consideration.

Preferential arrangements are given in the sub claims.

According to a preferential method for displaying a translucent object, and a preferential apparatus for displaying a translucent object, judgement can be made as to whether or not the object should be displayed as a translucent object depending upon the position of the object with respect to the viewpoint vector and the light source vector. When it is judged that the object should be displayed as a translucent object, display of the translucent object as above-mentioned displaying is performed. On the contrary, when it is judged that the object should not be displayed as a translucent object, display of the object as having an opaque surface according to the conventional display method, is performed.

To be more specific, when paper is to be visually displayed, it is generally sufficient that the paper is displayed as an opaque surface. However, it is necessary for realistic display that the paper be displayed as a translucent object depending upon relative positions of a viewpoint and a light source with respect to the paper. The inventor provided a judgement step concerning the relative positions of the viewpoint and the light source to determine whether the viewpoint and the light source are present on the same side of the paper or whether the viewpoint and the light source are on opposite sides of the paper. When the judgement result indicates the former, the paper should be displayed as an opaque object. On the contrary, when the judgement result indicates the latter, the paper should be displayed as a translucent object. Realistic display of the paper is accordingly obtained. The inventor also discovered that the judgement could easily be performed depending upon a result which is obtained by calculations involving the viewpoint vector, the light source vector and the normal vector. Judgement providing the relative positions of the viewpoint and the light source is easily performed accordingly. Consequently, the complexity of operations for visual display can be reduced remarkably.

The above, and other objects, features and advantages of this invention will be apparent from the following detailed description of illustrative embodiments which are to be read with the accompanying drawings.

Figure 1 is a flowchart illustrating a first embodiment of a method for displaying a translucent object in accordance with the present invention;
Figure 2 is a schematic diagram useful in understanding the relative positions of a viewpoint and a light source with respect to a translucent object;
Figure 3 is a block diagram of an embodiment of an apparatus for displaying a translucent object in accordance with the present invention;
Figure 4 is a block diagram of another embodiment of the apparatus for displaying a translucent object in accordance with the present invention;
Figure 5 is a flow chart illustrating an alternative method for displaying a translucent object in accordance with the present invention;
Figure 6 is a perspective view of a paper cup with a band which requires display of an opaque object and display of a translucent object;
Figure 7 is a block diagram of still another embodiment of the apparatus for displaying a translucent object in accordance with the present invention;
Figure 8 is a schematic illustrative view showing two light sources;
Figure 9 is a block diagram of yet another embodiment of the apparatus for displaying a translucent object in accordance with the present invention; and
Figure 10 is a schematic diagram useful in understanding diffused transmitted light.

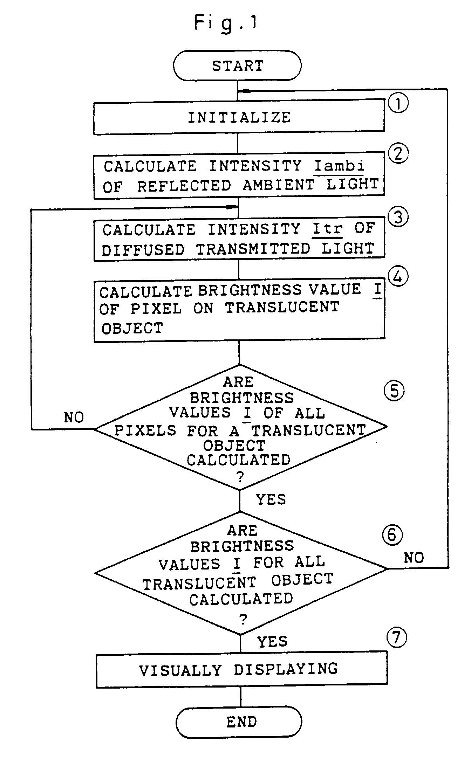

Fig. 1 is a flowchart illustrating a method for displaying a translucent object in accordance with the present invention.

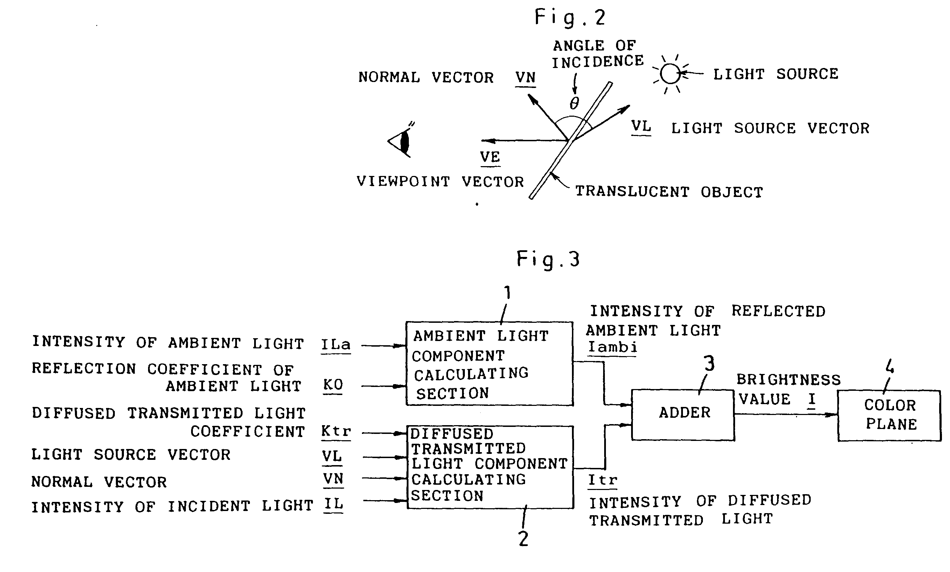

When it is indicated that the display of a translucent object is to be performed, in step (1), the intensity $\underline{IL}$ of incident light from a light source, a diffused transmitted light coefficient $\underline{Ktr}$ (coefficient of transmitted light to incident light) for a translucent object, a light source vector $\underline{VL}$ (refer to Fig. 2), a normal vector $\underline{VN}$ (refer to Fig. 2) normal to the translucent object and other parameters are initialized; in step (2), the intensity $\underline{Iambi}$ of reflected ambient light is calculated in a conventional manner; in step (3), the intensity $\underline{Itr}$ of diffused transmitted light is also calculated. Then in step (4), a brightness value for the translucent object is obtained by adding the intensity $\underline{Iambi}$ of reflected ambient light and the intensity $\underline{Itr}$ of diffused transmitted light. Thereafter, in step (5), it is judged whether or not brightness values of all pixels are obtained for a display surface of the translucent object to be displayed. When it is judged that the brightness values of some pixels have not yet been obtained, then processing in step (3) is carried out again. On the contrary, when it is judged that the brightness values of all pixels already have been obtained, then in step (6), it is judged whether or not the brightness values for all translucent objects have been obtained. When it is judged that the brightness values for some translucent objects have not yet been obtained, then processing in step (1) is carried out again. On the contrary, when it is judged that the brightness values for all translucent objects already have been obtained, then in step (7), translucent objects are visually displayed.

In step (3), the intensity $\underline{Itr}$ of the diffused transmitted light is calculated according to the equation

$$\underline{Itr} = \underline{Ktr} * \underline{IL} * \cos\theta$$

(where $\cos\theta = VL * VN$, and $*$ indicates multiplication). Then the intensity $\underline{Itr}$ which depends upon the angle of incidence of the incident light is obtained. The color of the light source is not taken into consideration in the equation, it is sufficient that calculations also taking color data into consideration are performed when the light source is not white light.

When a translucent object, such as frosted glass, is displayed according to the above-mentioned method, the outline of a light source which is seen through the translucent object is blurred to obtain a superior realistic display of the translucent object. Not only when light from the light source is incident on the translucent object, but when light from the light source is reflected by a background object and is then incident on the translucent object, the outline of the background object is displayed as blurred to obtain a superior realistic display.

Fig. 3 is a block diagram of an apparatus for displaying a translucent object in accordance with the present invention.

The apparatus includes an ambient light component calculating section 1, a diffused transmitted light component calculating section 2, an adder 3 and a color plane 4. The ambient light component calculating section 1 is well known to the person having ordinary skill in the art.

The ambient light component calculating section 1 receives an ambient light intensity value $\underline{ILa}$ and a reflection coefficient $\underline{KO}$, and calculates the intensity $\underline{Iambi}$ of the reflected ambient light based upon the intensity $\underline{ILa}$ and the reflection coefficient $\underline{KO}$. The diffused transmitted light component calculating section 2 receives the intensity value $\underline{IL}$ corresponding to incident light from a light source, a diffused transmitted light coefficient $\underline{Ktr}$, a light source vector $\underline{VL}$ and a normal vector $\underline{VN}$, and calculates the intensity $\underline{Itr}$ of diffused transmitted light according to the equation

$$\underline{Itr}=\underline{Ktr}*\underline{IL}*\cos\theta$$

(where $\cos\theta=\underline{VL}*\underline{VN}$). The diffused transmitted light component calculating section 2 may calculate the intensity $\underline{Itr}$ also by taking color data into consideration. The adder 3 adds the intensity $\underline{Iambi}$ of the reflected ambient light and the intensity $\underline{Itr}$ of the diffused transmitted light to obtain a sum and writes the sum to the color plane 4.

In this embodiment, a brightness value $\underline{I}$ ($=\underline{Iambi}$ + $\underline{Itr}$) for displaying a translucent object can be obtained by adding the intensity $\underline{Iambi}$ of reflected ambient light and the intensity $\underline{Itr}$ of diffused transmitted light which varies depending upon the angle of incidence of the light from the light source.

When a translucent object, such as frosted glass, is displayed by the above-mentioned apparatus, the outline of a light source which is seen through the translucent object is blurred to obtain a superior realistic display of the translucent object. Not only when light from the light source is incident on the translucent object, but when light from the light source is reflected by a background object and is then incident on the translucent object, the outline of the background object is displayed as blurred to obtain a superior realistic display.

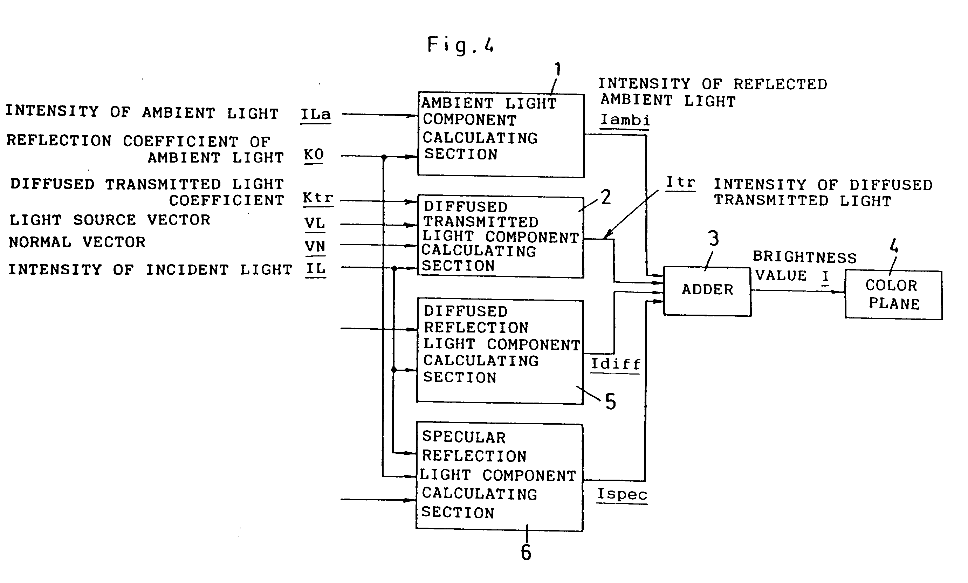

Fig. 4 is a block diagram of another embodiment of the apparatus for displaying a translucent object in accordance with the present invention.

The embodiment of Fig. 4 differs from the embodiment of Fig. 3 in that a diffused reflection light component calculating section 5 and a specular reflection light component calculating section 6 are further provided. The diffused reflection light component calculating section 5 and the specular reflection light component calculating section 6 are employed in conventional apparatus for displaying images with shading.

In this embodiment, display of an opaque object can be performed by providing a zero, "0", value output from the diffused transmitted light component calculating section 2. On the contrary, display of a translucent object can be performed by providing "0" value outputs from the diffused reflection light component calculating section 5 and the specular reflection light component calculating section 6. The selection of the above-mentioned states can be performed by setting the coefficient to "0" value, the coefficient being supplied to the corresponding calculating section whose output should be set to "0" value. Consequently, the display of opaque objects and translucant objects can be performed without significantly complicating the arrangement.

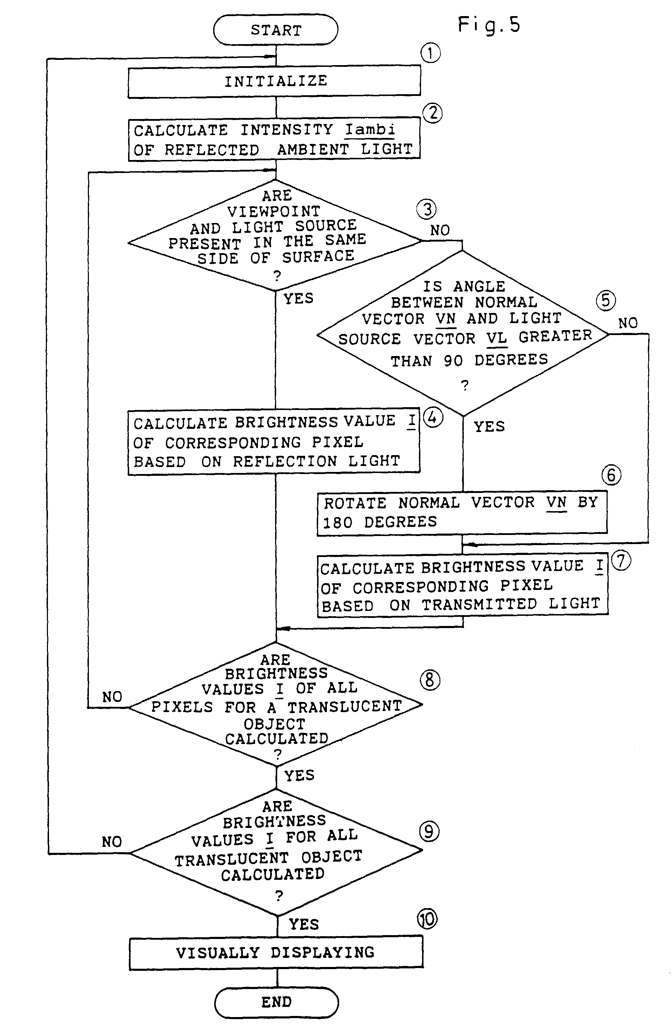

Fig. 5 is a flow chart illustrating an alternative method for displaying translucent objects in accordance with the present invention.

The method illustrated in Fig. 5 differs from the method of Fig. 1 in that a judgement is performed to determine whether or not an object should be displayed as a translucent object.

In step (1), the intensity $\underline{IL}$ of incident light from a light source, a diffused transmitted light coefficient $\underline{Ktr,}$ a light source vector $\underline{VL}$ (a vector starting from a reflecting point and directed to a light source), a normal vector $\underline{VN}$ normal to the surface of the translucent object, a viewpoint vector $\underline{VE}$ (a vector starting from a reflecting point and directed to a view point) and other parameters are initialized; in step (2), the intensity $\underline{Iambi}$ of reflected ambient light is calculated in the conventional manner. Then in step (3), it is judged whether or not a viewpoint and a light source are on the same side of a display surface of a translucent object to be displayed. The surface is hereinafter referred to as a translucent surface. The judgement is performed wherein, for example, an inner product of the viewpoint vector $\underline{VE}$ and the normal vector $\underline{VN}$ and an inner product of the light source vector $\underline{VL}$ and the normal vector $\underline{VN}$ are obtained; then it is judged whether or not the product of the inner products is positive. When the viewpoint and the light source are determined to be on the same side of the translucent surface (when the product of the inner products is greater than 0), in step (4), the intensity $\underline{Idiff}$ of diffused reflection light and the intensity $\underline{Ispec}$ of specular reflection light are calculated, and then a brightness value $\underline{I}$ for the corre-

sponding pixel is obtained by adding the intensity values Idiff and Ispec to the intensity value Iambi of the reflected ambient light. On the contrary, when the viewpoint and the light source are determined to be on the opposite sides of the translucent surface (when the product of the inner products is negative), in step (5), it is judged whether or not an angle between the normal vector VN and the light source vector VL is greater than 90 degrees. The judgement is performed by judging whether or not the inner product of the light source vector VL and the normal vector VN, is negative or not. Only when it is judged that the angle is greater than 90 degrees, in step (6), the normal vector VN is rotated by 180 degrees to obtain a normal vector for calculation. Then, in step (7), the intensity Itr of diffused transmitted light is calculated, and a brightness value I of a corresponding pixel is obtained by adding the intensity Itr and the intensity Iambi of the reflected ambient light. After the operation in step (4) or in step (7) is performed, in step (8), it is judged whether or not brightness values for all pixels of the translucent object have been obtained. When it is judged that brightness values of some pixels have not yet been obtained, the operation in step (3) is carried out again. On the contrary, when it is judged that the brightness values of all pixels already have been obtained, then in step (9), it is judged whether or not brightness values for all objects have been obtained. When it is judged that brightness values for some objects have not yet been obtained, the operation in step (1) is carried out again. On the contrary, when it is judged that the brightness values for all objects already have been obtained, then in step (10), all objects are visually displayed.

As is apparent from the foregoing, where multiple objects may require display as a translucent object or display as an opaque object, displaying one or more objects as a translucent object is automatically selected depending upon the relative position of the display surface of the object to be displayed, with respect to the viewpoint and the light source. As a result, a superior realistic display of each translucent object is performed.

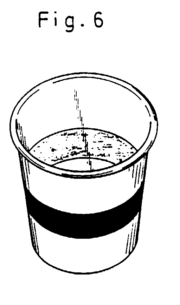

With reference to Fig. 6, when a paper cup which has a red-colored band on its outer surface is to be visually displayed, a portion of the paper cup nearest a light source would have the band on a surface opposite the viewpoint side. The portion nearest the light source would undergo processing for display of a translucent object by using light transmitted through the band as a new light source for display of the nearest-to-the-light-source portion to show the color of the band as blurred when viewed through the inner surface of the paper cup. As to the portion of the cup nearest the viewpoint, this portion is displayed to show the color of the band clearly, without showing the light source at all because of the low transmissivity of the paper. As a result, the paper cup is displayed as fairly similar to its actual appearance.

When a similar display is to be obtained by using conventional method, the band is mapped on the nearest-the-viewpoint surface in a portion through which the band is to be seen by a texture mapping method. The color of the band to be mapped is determined to be faint, corresponding to how the band would be seen through the paper. This results in a remarkably long time period for processing a display and the display is not very realistic.

On the contrary, when a method for displaying translucent objects in accordance with the present invention is employed, the necessary time period for displaying is barely increased and a superior realistic display is provided.

According to the method of Fig. 5, the normal vector VN is rotated by 180 degrees in step (6). However, it is possible to obtain the absolute value of the inner product of the light source vector VL and the normel vector VN. In this case, it is not necessary to judge whether or not the angle between the light source vector VL and the normal vector VN is greater than 90 degrees.

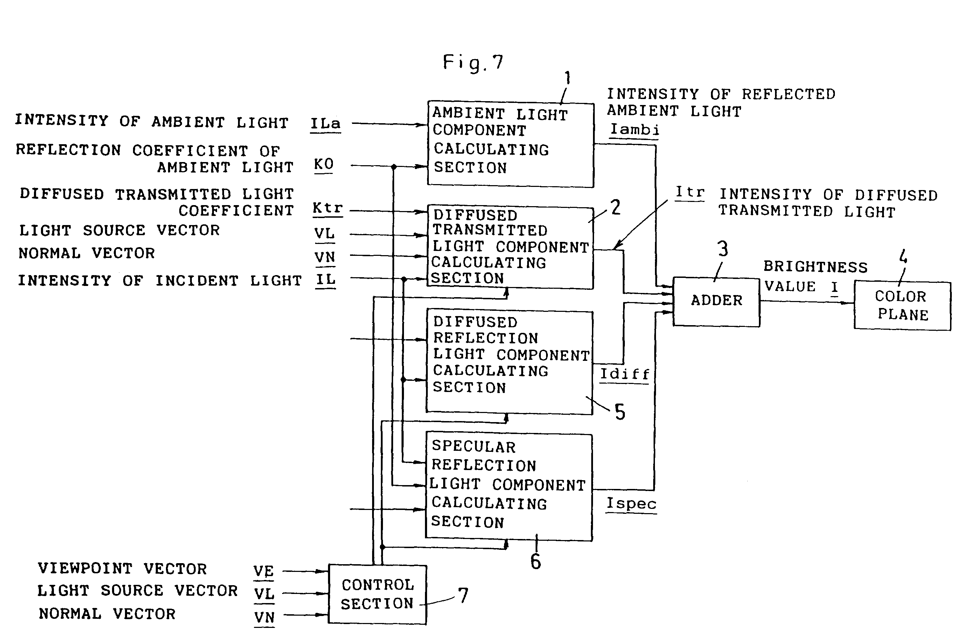

Fig. 7 is a block diagram of another embodiment of the apparatus for displaying translucent objects in accordance with the present invention.

The embodiment of Fig. 7 differs from the embodiment of Fig. 4 in that a control section 7 is provided for judging whether or not an object should be displayed as a translucent object and for controlling the operation of the calculating sections 2, 5 and 6. The control section 7 obtains an inner product of the viewpoint vector VE and the normal vector VN and an inner product of the light source vector VL and the normal vector VN; then obtains the product of the inner products and, thereafter, outputs a control signal indicative of whether or not the product is negative. The control signal operates only the diffused transmitted light component calculating section 2 when the product is negative, and operates the diffused reflection light component calculating section 5 and the specular reflection light component calculating section 6 when the product is equal or greater than 0. The ambient light component calculating section 1 operates in both cases.

In this embodiment, the control section 7 outputs a control signal depending upon the relative positions of the viewpoint, the light source and the object surface to be displayed so as to automatically select between displaying the object as a translucent object by operating the ambient light component calculating section 1 and the diffused transmitted light component calculating section 2, or displaying the object as an opaque object by operating the ambient light component calculating section 1, the diffused reflection light component calculating section 5 and the specular reflection light component calculating section 6. As a result, there is no need for an operator to designate an object as an opaque object or a translucent object for all objects to be displayed. The operability is thereby remarkably improved.

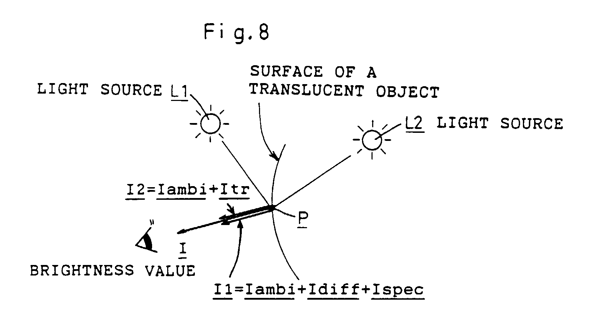

Fig. 8 schematically illustrates a light source L1 on the same side as the viewpoint with respect to the object surface to be displayed, while another light source $\underline{L2}$ is present on the side opposite the viewpoint side.

The brightness value $\underline{I}$ of a point $\underline{P}$ on the object surface to be displayed is obtained using the equation,

$$\underline{I}=(\underline{Iambi}+\underline{Idiff}+\underline{Itr}+\underline{Ispec}).$$

The brightness value $\underline{I}$ is a function of a brightness value $\underline{I1}$ and a brightness value $\underline{I2}$. The brightness value $\underline{I1}$ is attribured to the light source $\underline{L1}$ and is obtained by the following equation,

$$\underline{I1}=\underline{Iambi}+\underline{Idiff}+\underline{Ispec}.$$

The brightness value $\underline{I2}$ is attributed to the light source $\underline{L2}$ and is obtained by the following equation,

$$\underline{I2}=\underline{Iambi}+\underline{Itr}.$$

As is apparent from the foregoing, display of an opaque surface is performed corresponding to the light source $\underline{L1}$, while display of a translucent surface is performed corresponding to the light source $\underline{L2}$. Display with superior realism is accordingly obtained.

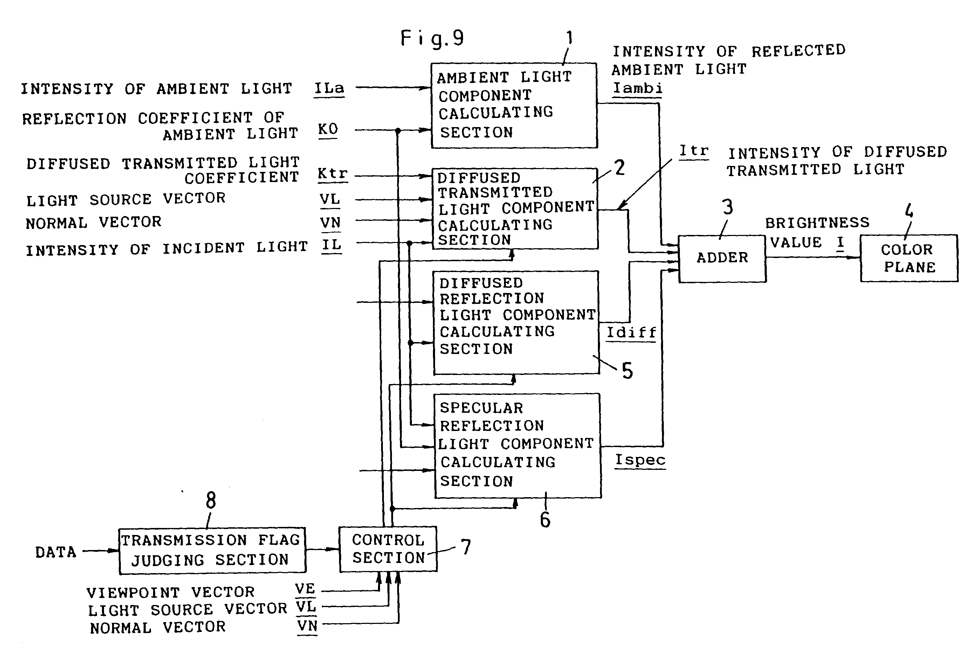

Fig. 9 is a block diagram of still another embodiment of the apparatus for displaying translucent objects in accordance with the present invention.

The embodiment of Fig. 9 differs from the embodiment of Fig. 7 in that a transmission flag judging section 8 is further provided to control the operation of the control section 7. Also, a host processor (not shown) or the like provides a transmission flag $\underline{f}$ which indicates whether or not data displaying an object as a translucent object should be provided as additional data to surface data representative of a surface of the object. The transmission flag judging section 8 judges whether or not the transmission flag $\underline{f}$ has been set. When the transmission flag $\underline{f}$ has been set, the transmission flag judging section 8 operates the control section 7 as described in connection with the embodiment of Fig. 7. On the contrary, when the transmission flag $\underline{f}$ has not been set, the transmission flag judging section 8 operates the control section 7 to perform an opaque object display operation.

In this embodiment, when objects which may be displayed as translucent objects and objects which are not to be displayed as translucent objects are present, the selection of whether to display an object as opaque or translucent is performed automatically.

In each embodiment, it is possible that the thickness of an object to be displayed can be visually represented by taking the transmissivity corresponding to the thickness of the object into consideration. It is also possible that the diffused transmitted light coefficient $\underline{Ktr}$ is a function of the intensity $\underline{IL}$ of the incident light so as to improve accuracy in the display of an object.

## Claims

1. A method for displaying a translucent object on a display screen, said method comprising the steps of:

   calculating a reflected ambient light component ($\underline{Iambi}$);
   calculating a diffused transmitted light component ($\underline{Itr}$) based upon light from a light source ($\underline{L2}$) which light is diffused within said translucent object to be displayed and which light passes through said translucent object;
   adding said reflected ambient light component ($\underline{Iambi}$) and said diffused transmitted light component ($\underline{Itr}$) to calculate a brightness value ($\underline{I}$) for each pixel of said translucent object; and
   visually displaying said translucent object based upon said calculated brightness values ($\underline{I}$);

   characterized in that said diffused transmitted light component is calculated taking further into account the angle ($\theta$) of incidence of the incident light illuminating said translucent object.

2. A method for displaying a translucent object on a display screen as set forth in claim 1, wherein said diffused transmitted light component ($\underline{Itr}$) is calculated based upon a coefficient ($\underline{Ktr}$) which is a function of the characteristics of the material forming said translucent object, the thickness of said translucent object and the intensity ($\underline{IL}$) of incident light from the light source ($\underline{L2}$).

3. A method as claimed in claim 1 or 2, wherein it is judged whether to display said object as a translucent object based upon the relation of a viewpoint vector ($\underline{VE}$) and a light source vector ($VL$) with respect to said object, the object being displayed as a translucent object if said viewpoint vector ($\underline{VE}$) and said light source vector ($\underline{VL}$) point to different sides of a surface of said object.

4. An apparatus for displaying a translucent object on a display screen, said apparatus comprising;

   an ambient light component calculating means (1) for calculating a reflected ambient light component ($\underline{Iambi}$);
   a diffused transmitted light component calculating means (2) for calculating a diffused transmitted light component ($\underline{Itr}$) based upon light incident on said translucent object from a light source ($\underline{L2}$), and characteristics of a material forming said translucent object, and the thickness of said translucent object, said diffused transmitted light component ($\underline{Itr}$) being defined

as the light component from the light source (L2) which light is diffused within a translucent object to be displayed and which light passes through said translucent object;
brightness value calculating means (3) for calculating a brightness value (I) by adding the reflected ambient light component (Iambi) calculated by said ambient light component calculating means (1) and the diffused transmitted light component (Itr) calculated by said diffused transmitted light component calculating means (2); and
display means (4) for visually displaying said translucent object based upon the brightness values (I) calculated by said brightness value calculating means (3), characterized in that the diffused transmitted light component calculating means calculate said diffused transmitted light component taking further into account the angle (θ) of incidence of the incident light illuminating said object.

5. An apparatus as claimed in claim 4, comprising:

judging means (7) for judging whether to display an object to be displayed as a translucent object depending upon the relation of a viewpoint vector (VE), a light source vector (VL) and a normal vector (VN) of a surface of said object with respect to said object said object being displayed as a translucent object if the inner product of said viewpoint vector (VE) and said normal vector (VN) has a sign different from the inner product of said vector (VL) and said normal vector (VN).

**Patentansprüche**

1. Verfahren zum Darstellen eines durchsichtigen Objektes auf einem Sichtanzeigegerät, wobei das Verfahren die Schritte aufweist:

Berechnen einer reflektierten Umgebungslichtkomponente (Iambi) ;
Berechnen einer gestreuten durchgelassenen Lichtkomponente (Itr) auf der Grundlage von Licht von einer Lichtquelle (L2), wobei das Licht in dem darzustellenden durchsichtigen Objekt gestreut wird und wobei das Licht durch das durchsichtige Objekt geht;
Addieren der reflektierten Umgebungslichtkomponente (Iambi) und der gestreuten durchgelassenen Lichtkomponente (Itr) zum Berechnen eines Helligkeitswertes (I) für jedes Bildelement des durchsichtigen Objektes; und
visuell Darstellen des durchsichtigen Objektes auf der Grundlage der berechneten Helligkeitswerte (I),

dadurch gekennzeichnet,
daß die gestreute durchgelassene Lichtkomponente unter weiterer Berücksichtigung des Einfallswinkels (Θ) des einfallenden Lichtes, das das durchsichtige Objekt beleuchtet, berechnet wird.

2. Verfahren zum Darstellen eines durchsichtigen Objektes auf einem Sichtanzeigegerät nach Anspruch 1, bei dem die gestreute durchgelassene Lichtkomponente (Itr) berechnet wird auf der Grundlage eines Koeffizienten (Ktr), der eine Funktion der Eigenschaften des Materiales ist, das das durchsichtige Objekt bildet, der Dicke des durchsichtigen Objektes und der Intensität (IL) des einfallenden Lichtes von der Lichtquelle (L2).

3. Verfahren nach Anspruch 1 oder 2, bei dem beurteilt wird, ob das Objekt als ein durchsichtiges Objekt auf der Grundlage der Beziehung eines Blickrichtungsvektors (VE) und eines Lichtquellenvektors (VL) in Bezug auf das Objekt darzustellen ist, wobei das Objekt als ein durchsichtiges Objekt dargestellt wird, wenn der Blickrichtungsvektor (VE) und der Lichtquellenvektor (VL) zu verschiedenen Seiten einer Oberfläche des Objektes zeigen.

4. Gerät zum Darstellen eines durchsichtigen Objektes auf einem Sichtanzeigegerät, wobei das Gerät aufweist:

ein Berechnungsmittel (1) einer Umgebungslichtkomponente zum Berechnen einer reflektierten Umgebungslichtkomponente (Iambi);
ein Berechnungsmittel (2) einer gestreuten durchgelassenen Lichtkomponente zum Berechnen einer gestreuten durchgelassenen Lichtkomponente (Itr) auf der Grundlage von Licht, das auf das durchsichtige Objekt von einer Lichtquelle (L2) einfällt, und Eigenschaften eines Materiales, das das durchsichtige Objekt bildet, und der Dicke des durchsichtigen Objektes, wobei die gestreute durchgelassene Lichtkomponente (Itr) als die Lichtkomponente von der Lichtquelle (L2) definiert ist, welches Licht innerhalb eines darzustellenden durchsichtigen Objektes gestreut ist und welches Licht durch das durchsichtige Objekt geht;
ein Berechnungsmittel (3) eines Helligkeitswertes zum Berechnen eines Helligkeitswertes (I) durch Addieren der von dem Berechnungsmittel (1) der Umgebungslichtkomponente berechneten reflektierten Umgebungslichtkomponente (Iambi) und der von dem Berechnungsmittel (2) der gestreuten durchgelassenen Lichtkomponente berechneten gestreuten durchgelassenen Lichtkomponente (Itr); und

ein Darstellungsmittel (4) zum visuellen Darstellen des durchsichtigen Objektes auf der Grundlage des von dem Berechnungsmittel (3) des Helligkeitswertes berechneten Helligkeitswertes (I),

dadurch gekennzeichnet, daß das Berechnungsmittel der gestreuten durchgelassenen Lichtkomponente die gestreute durchgelassene Lichtkomponente unter weiterer Berücksichtigung des Einfallswinkels ($\Theta$) des das Objekt beleuchtenden Einfallslichtes berechnet.

5. Gerät nach Anspruch 4, mit:

einem Beurteilungsmittel (7) zum Beurteilen, ob ein darzustellendes Objekt als ein durchsichtiges Objekt dargestellt werden soll in Abhängigkeit der Beziehung eines Blickrichtungsvektors (VI), eines Lichtquellenvektors (VL) und eines normalen Vektors (VN) einer Oberfläche des Objektes in Bezug auf das Objekt, wobei das Objekt als ein durchsichtiges Objekt dargestellt wird, wenn das innere Produkt des Blickrichtungsvektors (VI) und des normalen Vektors (VN) ein Vorzeichen unterschiedlich von dem des inneren Produktes des Vektors (VL) und des normalen Vektors (VN) aufweist.

## Revendications

1. Méthode pour afficher un objet translucide sur un écran de présentation, comprenant les opérations suivantes:

calculer une composante de lumière ambiante réfléchie (Iambi);
calculer une composante de lumière diffuse transmise (Itr) sur la base de la lumière émise par une source lumineuse (L2), ladite lumière étant diffusée au dedans dudit objet translucide à afficher et passant par ledit objet translucide;
additionner ladite composante de lumière ambiante réfléchie (Iambi) et ladite composante de lumière diffuse transmise (Itr) afin de calculer une luminosité (I) pour chaque point de l'image dudit objet translucide; et
afficher et visualiser ledit objet translucide sur la base de ladite luminosité calculée (I);

**caractérisée** en ce que ladite composante de lumière diffuse transmise est calculée en prenant également en considération l'angle ($\theta$) de l'incidence de la lumière incidente qui irradie ledit objet translucide.

2. Méthode pour afficher un objet translucide sur un écran de présentation selon la revendication 1, dans laquelle ladite composante de lumière diffuse transmise (Itr) est calculée sur la base d'un coefficient (Ktr) qui est une fonction des caractéristiques de la matière dont ledit objet translucide est fait, de l'épaisseur dudit objet translucide, et de l'intensité (IL) de la lumière incidente qui provient de ladite source lumineuse (L2).

3. Méthode selon la revendication 1 ou 2, dans laquelle on apprécie si ledit objet soit visualisé sous forme d'un objet translucide sur la base du rapport entre un vecteur de point d'observation (VE) et un vecteur de source lumineuse (VL), par rapport audit objet, l'objet étant affiché sous forme d'un objet translucide si ledit vecteur de point d'observation (VE) et ledit vecteur de source lumineuse (VL) sont orientés vers des côtés différents d'une surface dudit objet.

4. Appareil d'affichage d'un objet translucide sur un écran de présentation, comprenant:

un dispositif (1) à calculer une composante de lumière ambiante réfléchie (Iambi);
un dispositif (2) à calculer une composante de lumière diffuse transmise (Itr) sur la base de la lumière émise par une source lumineuse (L2) et des caractéristiques de la matière dont ledit objet translucide est fait, et de l'épaisseur dudit objet translucide, ladite composante de lumière diffuse transmise (Itr) étant définie comme la composante de lumière de ladite source lumineuse (L2), quelle lumière est diffusée au dedans d'un objet translucide à afficher et passe par ledit objet translucide;
un dispositif (3) à calculer une luminosité (I) pour le calcul d'une luminosité (I) en additionnant ladite composante de lumière ambiante réfléchie (Iambi), qui est calculée par ledit dispositif (1) à calculer une composante de lumière ambiante, et ladite composante de lumière diffuse transmise (Itr), qui est calculée par ledit dispositif (2) à calculer une composante de lumière diffuse transmise; et
un dispositif d'affichage à afficher et visualiser ledit objet translucide sur la base desdites valeurs de luminosité (I) calculées par ledit dispositif (3) à calculer une luminosité;

**caractérisé** en ce que ledit dispositif (2) à calculer une composante de lumière diffuse transmise établit par calcul ladite composante de lumière diffuse transmise en prenant également en considération l'angle ($\theta$) de l'incidence de la lumière incidente qui irradie ledit objet translucide.

5. Appareil selon la revendication 4, comprenant:

un dispositif (7) de jugement à apprécier si un objet à afficher soit visualisé sous forme d'un objet translucide en fonction du rapport entre un vecteur de point d'observation (VE), un vecteur de source lumineuse (VL), et un vecteur normal (VN) d'une surface dudit objet, par rapport audit objet,

ledit objet étant visualisé sous forme d'un objet translucide si le produit intérieur dudit vecteur de point d'observation (VE) et dudit vecteur normal (VN) présente un signe différent du signe du produit intérieur dudit vecteur de source lumineuse (VL) et dudit vecteur normal (VN).

EP 0 379 225 B1

## Fig.1

```
                    ┌──────────────┐
                    │    START     │
                    └──────┬───────┘
                           │
        ┌──────────────────────────────────────┐ ①
        │             INITIALIZE                │
        └──────────────────┬───────────────────┘
                           │
        ┌──────────────────────────────────────┐ ②
        │   CALCULATE INTENSITY Iambi          │
        │   OF  REFLECTED AMBIENT LIGHT        │
        └──────────────────┬───────────────────┘
                           │
        ┌──────────────────────────────────────┐ ③
        │   CALCULATE INTENSITY Itr OF         │
        │   DIFFUSED TRANSMITTED LIGHT         │
        └──────────────────┬───────────────────┘
                           │
        ┌──────────────────────────────────────┐ ④
        │   CALCULATE BRIGHTNESS VALUE I       │
        │   OF PIXEL ON TRANSLUCENT            │
        │   OBJECT                             │
        └──────────────────┬───────────────────┘
                           │
                    ╱────────────╲  ⑤
              ╱     ARE            ╲
            ╱    BRIGHTNESS          ╲
    NO    ╱   VALUES I OF ALL         ╲
   ◄─────   PIXELS FOR A TRANSLUCENT
            ╲      OBJECT            ╱
              ╲  CALCULATED       ╱
                ╲     ?         ╱
                    ╲────────╱
                        │ YES
                    ╱────────────╲  ⑥
              ╱     ARE            ╲
            ╱    BRIGHTNESS          ╲     NO
          ╱   VALUES I FOR ALL        ╲────────►
            ╲  TRANSLUCENT OBJECT    ╱
              ╲  CALCULATED        ╱
                ╲     ?          ╱
                    ╲────────╱
                        │ YES                  ⑦
        ┌──────────────────────────────────────┐
        │        VISUALLY DISPLAYING           │
        └──────────────────┬───────────────────┘
                           │
                    ┌──────────────┐
                    │     END      │
                    └──────────────┘
```

## Fig.2

ANGLE OF INCIDENCE

LIGHT SOURCE

NORMAL VECTOR VN

$\theta$

VL LIGHT SOURCE VECTOR

VE

VIEWPOINT VECTOR

TRANSLUCENT OBJECT

## Fig.3

INTENSITY OF AMBIENT LIGHT ILa

REFLECTION COEFFICIENT OF AMBIENT LIGHT KO

DIFFUSED TRANSMITTED LIGHT COEFFICIENT Ktr

LIGHT SOURCE VECTOR VL

NORMAL VECTOR VN

INTENSITY OF INCIDENT LIGHT IL

1

AMBIENT LIGHT COMPONENT CALCULATING SECTION

INTENSITY OF REFLECTED AMBIENT LIGHT
Iambi

3

ADDER

BRIGHTNESS VALUE I

4

COLOR PLANE

2

DIFFUSED TRANSMITTED LIGHT COMPONENT CALCULATING SECTION

Itr

INTENSITY OF DIFFUSED TRANSMITTED LIGHT

EP 0 379 225 B1

# Fig.4

INTENSITY OF AMBIENT LIGHT   $\underline{ILa}$

REFLECTION COEFFICIENT OF
             AMBIENT LIGHT   $\underline{KO}$

DIFFUSED TRANSMITTED LIGHT
           COEFFICIENT   $\underline{Ktr}$

LIGHT SOURCE VECTOR   $\underline{VL}$

NORMAL VECTOR   $\underline{VN}$

INTENSITY OF INCIDENT LIGHT   $\underline{IL}$

**1**
AMBIENT LIGHT
COMPONENT
CALCULATING
SECTION

INTENSITY OF REFLECTED
AMBIENT LIGHT
$\underline{Iambi}$

**2**
DIFFUSED
TRANSMITTED
LIGHT COMPONENT
CALCULATING
SECTION

$\underline{Itr}$ INTENSITY OF DIFFUSED
TRANSMITTED LIGHT

DIFFUSED
REFLECTION
LIGHT COMPONENT
CALCULATING
SECTION

$\underline{Idiff}$

**5**

SPECULAR
REFLECTION
LIGHT COMPONENT
CALCULATING
SECTION

$\underline{Ispec}$

**6**

**3**
ADDER

BRIGHTNESS
VALUE $\underline{I}$

**4**
COLOR
PLANE

12

Fig.5

```
                    ┌─────────┐
                    │  START  │
                    └────┬────┘
                         │                              ①
          ┌──────────────┴──────────────┐
          │          INITIALIZE          │
          └──────────────┬──────────────┘
                         │                              ②
          ┌──────────────┴──────────────┐
          │ CALCULATE INTENSITY Iambi    │
          │ OF REFLECTED  AMBIENT LIGHT  │
          └──────────────┬──────────────┘
                         │                              ③
                   ╱─────┴─────╲
                 ╱   ARE         ╲
                ╱  VIEWPOINT       ╲      NO
               ╱ AND LIGHT SOURCE   ╲──────────────┐
               ╲ PRESENT IN THE SAME ╱              │
                ╲  SIDE OF SURFACE  ╱               │
                 ╲       ?        ╱                 │            ⑤
                   ╲─────┬─────╱                ╱───┴───╲
                      YES│                    ╱  IS ANGLE  ╲
                         │                   ╱ BETWEEN NORMAL╲   NO
                         │                  ╱ VECTOR VN AND LIGHT╲────┐
                         │                  ╲SOURCE VECTOR VL GREATER╱ │
                         │                   ╲  THAN 90 DEGREES   ╱    │
                         │                    ╲       ?        ╱       │
   ┌─────────────────────┴────────┐            ╲─────┬─────╱          │
   │ CALCULATE BRIGHTNESS VALUE I ④│              YES│               │
   │ OF CORRESPONDING PIXEL        │                 │               │
   │ BASED  ON REFLECTION LIGHT    │                 │               │
   └─────────────────────┬────────┘          ⑥       │               │
                         │          ┌────────────────┴──────┐       │
                         │          │ ROTATE NORMAL VECTOR VN BY│    │
                         │          │ 180 DEGREES            │       │
                         │          └────────────────┬──────┘       │
                         │                            │              │
                         │          ┌─────────────────┴─────────┐⑦  │
                         │          │ CALCULATE BRIGHTNESS VALUE I │  │
                         │          │ OF CORRESPONDING PIXEL        │◄─┘
                         │          │ BASED  ON TRANSMITTED LIGHT   │
                         │          └─────────────────┬─────────┘
                         └────────────┬───────────────┘
                                ╱─────┴─────╲
                              ╱     ARE       ╲
                   NO        ╱  BRIGHTNESS      ╲       ⑧
              ┌────────────── VALUES I OF ALL     ╲
              │             ╲ PIXELS FOR A TRANSLUCENT╱
              │              ╲    OBJECT          ╱
              │               ╲  CALCULATED     ╱
              │                ╲      ?       ╱
              │                  ╲─────┬─────╱
              │                     YES│
              │                ╱─────┴─────╲
              │              ╱     ARE       ╲
              │   NO        ╱  BRIGHTNESS      ╲      ⑨
              │  ┌─────────── VALUES I FOR ALL   ╲
              │  │          ╲ TRANSLUCENT OBJECT ╱
              │  │           ╲  CALCULATED      ╱
              │  │            ╲      ?        ╱
              │  │              ╲─────┬─────╱
              │  │                 YES│              ⑩
              │  │      ┌────────────┴────────────┐
              │  │      │   VISUALLY DISPLAYING    │
              │  │      └────────────┬────────────┘
              │  │                   │
              │  │              ┌────┴────┐
              │  │              │   END   │
              │  │              └─────────┘
```

13

Fig. 6

## Fig.7

INTENSITY OF AMBIENT LIGHT  $\underline{ILa}$ → **AMBIENT LIGHT COMPONENT CALCULATING SECTION** (1)

REFLECTION COEFFICIENT OF AMBIENT LIGHT  $\underline{KO}$

DIFFUSED TRANSMITTED LIGHT COEFFICIENT  $\underline{Ktr}$

LIGHT SOURCE VECTOR  $\underline{VL}$

NORMAL VECTOR  $\underline{VN}$

INTENSITY OF INCIDENT LIGHT  $\underline{IL}$

INTENSITY OF REFLECTED AMBIENT LIGHT  $\underline{Iambi}$

**DIFFUSED TRANSMITTED LIGHT COMPONENT CALCULATING SECTION** (2)

$\underline{Itr}$ INTENSITY OF DIFFUSED TRANSMITTED LIGHT

**DIFFUSED REFLECTION LIGHT COMPONENT CALCULATING SECTION** (5)

$\underline{Idiff}$

**SPECULAR REFLECTION LIGHT COMPONENT CALCULATING SECTION** (6)

$\underline{Ispec}$

**ADDER** (3) → BRIGHTNESS VALUE $\underline{I}$ → **COLOR PLANE** (4)

VIEWPOINT VECTOR  $\underline{VE}$ →

LIGHT SOURCE VECTOR  $\underline{VL}$ →

NORMAL VECTOR  $\underline{VN}$ →

**CONTROL SECTION** (7)

EP 0 379 225 B1

Fig. 8

SURFACE OF A
TRANSLUCENT OBJECT

LIGHT SOURCE L1

L2 LIGHT SOURCE

I2=Iambi+Itr

P

I

BRIGHTNESS VALUE

I1=Iambi+Idiff+Ispec

Fig.9

INTENSITY OF AMBIENT LIGHT $\underline{ILa}$

REFLECTION COEFFICIENT OF
AMBIENT LIGHT $\underline{KO}$

DIFFUSED TRANSMITTED LIGHT
COEFFICIENT $\underline{Ktr}$

LIGHT SOURCE VECTOR $\underline{VL}$

NORMAL VECTOR $\underline{VN}$

INTENSITY OF INCIDENT LIGHT $\underline{IL}$

AMBIENT LIGHT
COMPONENT
CALCULATING
SECTION

INTENSITY OF REFLECTED
AMBIENT LIGHT
$\underline{Iambi}$

$\underline{Itr}$ INTENSITY OF DIFFUSED
TRANSMITTED LIGHT

DIFFUSED
TRANSMITTED
LIGHT COMPONENT
CALCULATING
SECTION

DIFFUSED
REFLECTION
LIGHT COMPONENT
CALCULATING
SECTION

$\underline{Idiff}$

SPECULAR
REFLECTION
LIGHT COMPONENT
CALCULATING
SECTION

$\underline{Ispec}$

ADDER

BRIGHTNESS
VALUE $\underline{I}$

COLOR
PLANE

DATA

TRANSMISSION FLAG
JUDGING SECTION

CONTROL
SECTION

VIEWPOINT VECTOR $\underline{VE}$
LIGHT SOURCE VECTOR $\underline{VL}$
NORMAL VECTOR $\underline{VN}$

EP 0 379 225 B1

# Fig.10

DIFFUSED
REFLECTION LIGHT

INCIDENT
LIGHT

FRONT SURFACE
OF OBJECT

ELEMENTARY
PARTICLE LAYER

BACK SURFACE
OF OBJECT

DIFFUSED
TRANSMITTED LIGHT